# EUROPÄISCHE PATENTANMELDUNG

(11) **EP 3 944 945 A1**
(43) Veröffentlichungstag der Anmeldung: **02.02.2022**
(21) Anmeldenummer: 20188121.6
(22) Anmeldetag: 28.07.2020
(51) Int. Cl.: B29C 45/00, B29C 45/56, B29L 11/00

(54) **SPRITZGUSSVORRICHTUNG ZUR HERSTELLUNG EINES BAUTEILS**

(71) Anmelder: ZKW Group GmbH, 3250 Wieselburg (AT)
(72) Erfinder: Frühauf, Johannes, 3293 Lunz am See (AT)
(74) Vertreter: Patentanwaltskanzlei Matschnig & Forsthuber OG

(57) **Zusammenfassung**

Spritzgussvorrichtung (1) zur Herstellung eines Bauteils, umfassend eine erste (1a) und zweite Werkzeughälfte (1b), zwischen welchen ein mit Spritzgussmaterial (2) befüllbarer Hohlraum (3) gebildet ist, eine Zuführvorrichtung (4) zur Zuführung von Spritzgussmaterial (2) in den Hohlraum (3) über eine Zuführöffnung (5), wobei die Spritzgussvorrichtung (1) ein Kontaktelement (6) aufweist, welches über eine Durchgangsöffnung (7) in den Hohlraum (3) einbringbar ist, wobei das Kontaktelement (6) in einem ersten Zustand einen ersten Abstand zu der Zuführöffnung (5) aufweist, und in einem zweiten Zustand, in welchem Spritzgussmaterial (2) in den Hohlraum (3) eingebracht wird, das Kontaktelement (6) das Spritzgussmaterial kontaktiert, wobei durch den Kontakt das Kontaktelement (3) aus dem Hohlraum (3) geschoben wird, wobei sich der Abstand von dem Kontaktelement (6) zu der Zuführöffnung (5) vergrößert, und wobei in einem dritten Zustand, in welchem der gesamte Hohlraum (3) mit Spritzgussmaterial (2) gefüllt ist, sich das Kontaktelement (6) außerhalb des Hohlraums (3) befindet.

## Beschreibung

Die Erfindung betrifft eine Spritzgussvorrichtung zur Herstellung eines Bauteils, wobei die Spritzgussvorrichtung dazu eingerichtet ist, einen Bauteil mittels eines Spritzgussverfahrens herzustellen, wobei die Spritzgussvorrichtung Folgendes umfasst:
- eine erste und zweite Werkzeughälfte, wobei zwischen der ersten und zweiten Werkzeughälfte ein mit Spritzgussmaterial befüllbarer Hohlraum gebildet ist,
- eine Zuführvorrichtung zur Zuführung von Spritzgussmaterial in den Hohlraum zur Bildung eines Bauteils, wobei Spritzgussmaterial mittels der Zuführvorrichtung über eine Zuführöffnung mit einer Zuführrate in den Hohlraum einbringbar ist, wobei die Zuführvorrichtung dergestalt ausgebildet ist, dass sich beim Zuführen das Spritzgussmaterial in dem Hohlraum ausbreitet und diesen befüllt, wobei sich dabei eine Fließfront aus Spritzgussmaterial durch den Hohlraum ausbreitet bis dieser vollständig befüllt ist.

Die Erfindung betrifft ferner ein Verfahren zur Herstellung eines Bauteils mittels einer Spritzgussvorrichtung.

Im Stand der Technik sind Spritzgussvorrichtungen bekannt, wobei üblicherweise beim Herstellen eines Bauteils mit der Spritzgussvorrichtung ein Hohlraum, welcher zwischen zwei Werkzeughälften der Spritzgussvorrichtung ausgebildet ist, mit Spritzgussmaterial befüllt wird. Während dem Befüllen breitet sich das Spritzgussmaterial im Hohlraum, insbesondere in großvolumigen Bereichen des Hohlraums, unter Bildung eines sogenannten Freistrahls aus. Werden optische oder transparente Bauteile hergestellt, kann es durch die Bildung eines Freistrahls zu Unregelmäßigkeiten an der Oberfläche des Bauteils kommen, was zu einer Verschlechterung der optischen Eigenschaften führt.

Die Aufgabe der vorliegenden Erfindung besteht darin, die Nachteile des Standes der Technik zu lindern bzw. zu beseitigen. Die Erfindung setzt sich daher insbesondere zum Ziel, eine Spritzgussvorrichtung zu schaffen, bei welcher die Qualität der mit der Spritzgussvorrichtung hergestellten Bauteile verbessert wird.

Diese Aufgabe wird durch eine Spritzgussvorrichtung mit den Merkmalen von Anspruch 1 gelöst. Bevorzugte Ausführungen sind in den abhängigen Ansprüchen angegeben.

Erfindungsgemäß weist die Spritzgussvorrichtung ein Kontaktelement auf, welches über eine Durchgangsöffnung von außerhalb des Hohlraums in den Hohlraum einbringbar ist, wobei das Kontaktelement dergestalt ausgebildet und dazu eingerichtet ist, dass in einem ersten Zustand, in welchem sich kein Spritzgussmaterial in dem Hohlraum befindet, das Kontaktelement einen ersten Abstand zu der Zuführöffnung aufweist, und in einem zweiten Zustand, in welchem über die Zuführöffnung Spritzgussmaterial eingebracht wird, das Kontaktelement die Fließfront kontaktiert, wobei beim Befüllen des Hohlraums, durch den Kontakt der sich ausbreitenden Fließfront mit dem Kontaktelement, das Spritzgussmaterial das Kontaktelement mit einer Herausziehrate dergestalt durch die Durchgangsöffnung aus dem Hohlraum schiebt, dass sich der Abstand von dem Kontaktelement zu der Zuführöffnung mit einer Vergrößerungsrate vergrößert, und in einem dritten Zustand, in welchem der gesamte Hohlraum mit Spritzgussmaterial gefüllt ist, sich das Kontaktelement außerhalb des Hohlraums befindet.

Dadurch ergibt sich der Vorteil, dass das Spritzgussmaterial sich nicht ungehindert in dem Hohlraum ausbreitet, wobei insbesondere die Bildung eines Freistrahls verhindert wird. Das Spritzgussmaterial breitet sich vorzugsweise freistrahllos (d.h. ohne der Ausbildung eines Freistahls aus Spritzgussmaterial) in dem Hohlraum aus, wodurch die Oberfläche des Bauteils keine Unregelmäßigkeiten aufweist. Der Kontakt des Kontaktelements mit der Fließfront (die durch die fließende Front des eingespritzten Spritzgussmaterials während des Einspritzvorganges ausgebildet wird) kann im Wesentlichen unmittelbar beim Einbringen von Spritzgussmaterial in den Hohlraum erfolgen. Der Bauteil kann ein optischer Bauteil oder ein transparenter Bauteil sein. Insbesondere wird das Kontaktelement, beim Befüllen des Hohlraums, dynamisch aus dem Hohlraum bewegt. Damit kann eine Befüllung des Hohlraums mit Spritzgussmaterial bei gleichzeitiger, im Wesentlichen dynamischer, Entfernung des Kontaktelements erfolgen. Als Zuführvorrichtung kann ein Einspritzsystem vorgesehen sein, welches bei Spritzgussvorrichtungen üblich ist. Die Zuführvorrichtung bzw. das Einspritzsystem kann über die Zuführöffnung plastisches Spritzgussmaterial in den Hohlraum einbringen, wobei dazu die Zuführvorrichtung bzw. das Einspritzsystem eine Pumpvorrichtung aufweisen kann.

Es kann vorgesehen sein, dass die Durchgangsöffnung im Wesentlichen gegenüber der Zuführöffnung angeordnet ist. Vorzugsweise weist der Hohlraum eine erste Seite und eine der ersten Seite gegenüberliegende zweite Seite auf, wobei an der ersten Seite die Zuführöffnung und an der zweiten Seite die Durchgangsöffnung angeordnet ist. Die Durchgangsöffnung und die Zuführöffnung können im Wesentlichen diametral gegenüberliegend zu einander angeordnet sein.

Es kann vorgesehen sein, dass das Kontaktelement als Prallwand ausgebildet ist. Die Prallwand bzw. das Prallelement ist vorzugsweise dergestalt ausgebildet und dazu eingerichtet, während dem Befüllen des Hohlraums, die Fließfront zu kontaktieren und die ungehinderte Ausbreitung von Spritzgussmaterial im Hohlraum zu verhindern.

Es kann vorgesehen sein, dass beim Befüllen des Hohlraums die Herausziehrate des Kontaktelements und/oder die Zuführrate zeitlich konstant sind. Dadurch kann eine besonders gleichmäßige Befüllung des Hohlraums erfolgen.

Es kann vorgesehen sein, dass das Kontaktelement im Wesentlichen länglich und zylinder- oder quaderförmig ausgebildet ist.

Es kann vorgesehen sein, dass die Spritzgussvorrichtung eine Steuervorrichtung aufweist, welche dazu eingerichtet ist, die Herausziehrate des Kontaktelements aus dem Hohlraum zu steuern. Die Steuervorrichtung kann ein Antriebselement, insbesondere ein Linearantriebselement, aufweisen, welches das Kontaktelement in den Hohlraum und aus dem Hohlraum heraus bewegen kann. Die Steuervorrichtung kann ein Federelement aufweisen, welches das Kontaktelement in Richtung der Zuführvorrichtung (bzw. in Richtung innerhalb des Hohlraums) vorspannt, wobei das Spritzgussmaterial, während dem Befüllen, das Kontaktelement gegen die Federkraft aus dem Hohlraum schiebt. Die Steuervorrichtung kann dazu eingerichtet sein, die Herausziehrate anhand einer Herausziehzeit und einer Herausziehgeschwindigkeit zu steuern, wobei die Herausziehzeit bzw. die Herausziehgeschwindigkeit insbesondere in Abhängigkeit der von der Zuführrate gewählt werden kann.

Es kann vorgesehen sein, dass die Herausziehrate kleiner oder gleich der Zuführrate ist.

Es kann vorgesehen sein, dass die Herausziehrate größer oder gleich der Zuführrate.

Es kann vorgesehen sein, dass das Kontaktelement durch die Durchgangsöffnung linear bewegbar ist. Insbesondere weist das Kontaktelement einen Querschnitt auf, welcher im Wesentlichen dem Querschnitt bzw. der Form der Durchgangsöffnung entspricht.

Es kann vorgesehen sein, dass die Vergrößerungsrate beim Befüllen zeitlich konstant ist.

Erfindungsgemäß ist ein Verfahren zur Herstellung eines Bauteils mittels einer Spritzgussvorrichtung vorgesehen, wobei das Verfahren die folgenden Schritte umfasst:
- Bereitstellen einer Spritzgussvorrichtung, umfassend eine erste und zweite Werkzeughälfte, wobei zwischen der ersten und zweiten Werkzeughälfte ein mit Spritzgussmaterial befüllbarer Hohlraum gebildet ist, eine Zuführvorrichtung zur Zuführung von Spritzgussmaterial in den Hohlraum über eine Zuführöffnung und ein Kontaktelement, welches über eine Durchgangsöffnung von außerhalb des Hohlraums in den Hohlraum einbringbar ist, wobei das Kontaktelement in einem Zustand, in welchem sich kein Spritzgussmaterial in dem Hohlraum befindet, einen ersten Abstand zu der Zuführöffnung aufweist;
- Zuführen von Spritzgussmaterial in den Hohlraum mittels der Zuführvorrichtung zur Bildung eines Bauteils, wobei Spritzgussmaterial über die Zuführöffnung mit einer Zuführrate in den Hohlraum eingebracht wird, wobei sich beim Zuführen das Spritzgussmaterial in dem Hohlraum ausbreitet und diesen befüllt, wobei sich dabei eine Fließfront aus Spritzgussmaterial durch den Hohlraum ausbreitet bis dieser vollständig befüllt ist,
wobei während dem Befüllen des Hohlraums das Kontaktelement die Fließfront kontaktiert, wobei, durch den Kontakt der sich ausbreitenden Fließfront mit dem Kontaktelement, das Spritzgussmaterial das Kontaktelement mit einer Herausziehrate dergestalt durch die Durchgangsöffnung aus dem Hohlraum schiebt, dass sich der Abstand des Kontaktelements zu der Zuführöffnung mit einer Vergrößerungsrate vergrößert, wobei sich, wenn der gesamte Hohlraum mit Spritzgussmaterial gefüllt ist, das Kontaktelement außerhalb des Hohlraums befindet.

Es kann vorgesehen sein, dass die Durchgangsöffnung im Wesentlichen gegenüber der Zuführöffnung angeordnet ist.

Es kann vorgesehen sein, dass das Kontaktelement als Prallwand ausgebildet ist.

Es kann vorgesehen sein, dass während dem Befüllen des Hohlraums die Herausziehrate des Kontaktelements und die Zuführrate zeitlich konstant sind.

Es kann vorgesehen sein, dass das Kontaktelement im Wesentlichen länglich und zylinder- oder quaderförmig ausgebildet ist.

Es kann vorgesehen sein, dass die Spritzgussvorrichtung eine Steuervorrichtung aufweist, welche dazu eingerichtet ist, die Herausziehrate des Kontaktelements aus dem Hohlraum zu steuern.

Es kann vorgesehen sein, dass die Herausziehrate kleiner oder gleich der Zuführrate ist.

Es kann vorgesehen sein, dass die Herausziehrate größer oder gleich der Zuführrate ist.

Es kann vorgesehen sein, dass das Kontaktelement durch die Durchgangsöffnung linear bewegbar ist.

Es kann vorgesehen sein, dass die Vergrößerungsrate beim Befüllen zeitlich konstant ist.

Im Rahmen dieser Beschreibung sind die Begriffe "oben", "unten", "horizontal", "vertikal" als Angaben der Ausrichtung zu verstehen, wenn die Spritzgussvorrichtung in normaler Benutzungsstellung angeordnet ist.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine schematische Ansicht einer erfindungsgemäßen Spritzgussvorrichtung;
Fig. 2 eine schematische Ansicht eines Spritzgussverfahrens; und
Fig. 3 eine Detailansicht einer Werkzeughälfte einer Spritzgussvorrichtung.

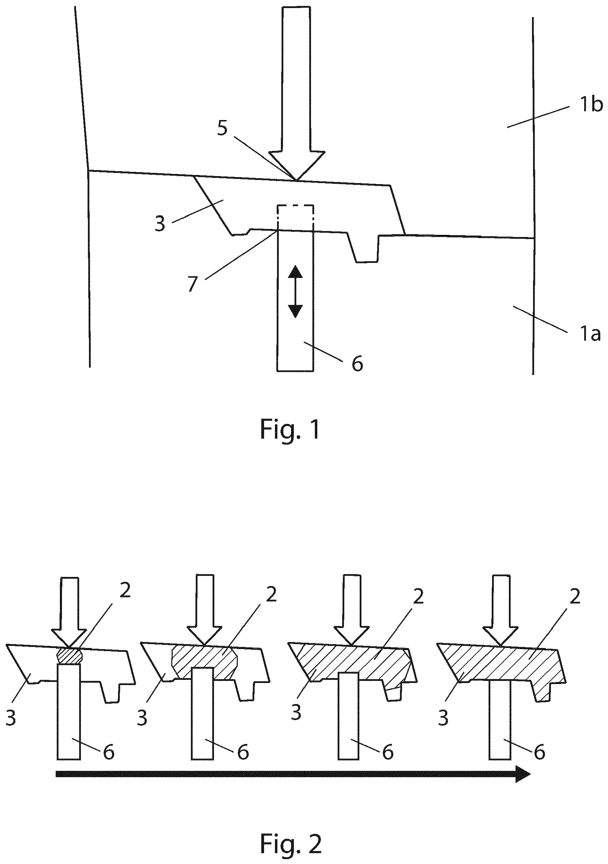

Fig. 1 zeigt eine (stark vereinfachte Darstellung einer) Spritzgussvorrichtung 1 zur Herstellung eines Bauteils, wobei die Spritzgussvorrichtung 1 dazu eingerichtet ist, einen Bauteil mittels eines Spritzgussverfahrens herzustellen. Die Spritzgussvorrichtung 1 umfasst eine erste 1a und zweite Werkzeughälfte 1b, wobei zwischen der ersten 1a und zweiten Werkzeughälfte 1b ein mit Spritzgussmaterial 2 befüllbarer Hohlraum 3 gebildet ist. Die Spritzgussvorrichtung umfasst ferner eine Zuführvorrichtung 4 zur Zuführung von Spritzgussmaterial 2 in den Hohlraum 3 zur Bildung eines Bauteils. Spritzgussmaterial 2 ist mittels der Zuführvorrichtung 4 über eine Zuführöffnung 5 mit einer Zuführrate in den Hohlraum 3 einbringbar. Die Zuführrate kann insbesondere variiert werden. Die Zuführvorrichtung 4 ist dergestalt ausgebildet, dass sich beim Zuführen das Spritzgussmaterial 2 in dem Hohlraum 3 ausbreitet und diesen befüllt, wobei sich dabei eine Fließfront aus Spritzgussmaterial 2 durch den Hohlraum 3 ausbreitet bis dieser vollständig befüllt ist.

Die Spritzgussvorrichtung 1 weist ein Kontaktelement 6 auf, welches über eine Durchgangsöffnung 7 von außerhalb des Hohlraums 3 in den Hohlraum 3 einbringbar ist. Das Kontaktelement kann als Prallwand oder Prallelement ausgebildet sein. Die Durchgangsöffnung 7 ist im Wesentlichen gegenüber der Zuführöffnung 5 angeordnet. Das Einbringen des Kontaktelements 6 erfolgt vorzugsweise vor dem Befüllen des Hohlraums. Das Kontaktelement 6 ist dergestalt ausgebildet und dazu eingerichtet, dass in einem ersten Zustand, in welchem sich kein Spritzgussmaterial 2 in dem Hohlraum 3 befindet, das Kontaktelement 6 einen ersten Abstand zu der Zuführöffnung 5 aufweist. In einem zweiten Zustand, in welchem über die Zuführöffnung 5 Spritzgussmaterial 2 eingebracht wird, kontaktiert das Kontaktelement 6 die Fließfront, wobei beim Befüllen des Hohlraums 3, durch den Kontakt der sich ausbreitenden Fließfront mit dem Kontaktelement 6, das Spritzgussmaterial 2 das Kontaktelement 3 mit einer Herausziehrate durch die Durchgangsöffnung 7 aus dem Hohlraum 3 schiebt. Der Abstand von dem Kontaktelement 6 zu der Zuführöffnung 5 wird dabei mit einer Vergrößerungsrate vergrößert. In einem dritten Zustand, in welchem der gesamte Hohlraum 3 mit Spritzgussmaterial 2 gefüllt ist, befindet sich das Kontaktelement 6 außerhalb des Hohlraums 3.

Dieser Befüllungsvorgang ist in Fig. 2 schematisch dargestellt. Es ist erkennbar, dass das Spritzgussmaterial 2 das Kontaktelement 6 beim Befüllen des Hohlraums 3 aus dem Hohlraum 3 schiebt.

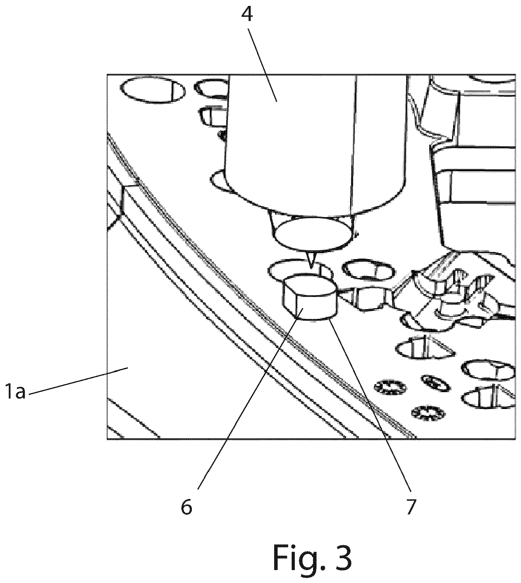

Fig. 3 zeigt eine Detailansicht der ersten Werkzeughälfte 1a. Das Kontaktelement ist durch die Durchgangsöffnung 7 geführt und gegenüber der Zuführvorrichtung 4 angeordnet.

## Patentansprüche

1. Spritzgussvorrichtung (1) zur Herstellung eines Bauteils, wobei die Spritzgussvorrichtung (1) dazu eingerichtet ist, einen Bauteil mittels eines Spritzgussverfahrens herzustellen, wobei die Spritzgussvorrichtung (1) Folgendes umfasst:
- eine erste (1a) und zweite Werkzeughälfte (1b), wobei zwischen der ersten (1a) und zweiten Werkzeughälfte (1b) ein mit Spritzgussmaterial (2) befüllbarer Hohlraum (3) gebildet ist,
- eine Zuführvorrichtung (4) zur Zuführung von Spritzgussmaterial (2) in den Hohlraum (3) zur Bildung eines Bauteils, wobei Spritzgussmaterial (2) mittels der Zuführvorrichtung (4) über eine Zuführöffnung (5) mit einer Zuführrate in den Hohlraum (3) einbringbar ist, wobei die Zuführvorrichtung (4) dergestalt ausgebildet ist, dass sich beim Zuführen das Spritzgussmaterial (2) in dem Hohlraum (3) ausbreitet und diesen befüllt, wobei sich dabei eine Fließfront aus Spritzgussmaterial (2) durch den Hohlraum (3) ausbreitet bis dieser vollständig befüllt ist,
**dadurch gekennzeichnet, dass**
- die Spritzgussvorrichtung (1) ein Kontaktelement (6) aufweist, welches über eine Durchgangsöffnung (7) von außerhalb des Hohlraums (3) in den Hohlraum (3) einbringbar ist, wobei das Kontaktelement (6) dergestalt ausgebildet und dazu eingerichtet ist, dass in einem ersten Zustand, in welchem sich kein Spritzgussmaterial (2) in dem Hohlraum (3) befindet, das Kontaktelement (6) einen ersten Abstand zu der Zuführöffnung (5) aufweist, und in einem zweiten Zustand, in welchem über die Zuführöffnung (5) Spritzgussmaterial (2) eingebracht wird, das Kontaktelement (6) die Fließfront kontaktiert, wobei beim Befüllen des Hohlraums (3), durch den Kontakt der sich ausbreitenden Fließfront mit dem Kontaktelement (6), das Spritzgussmaterial (2) das Kontaktelement (3) mit einer Herausziehrate dergestalt durch die Durchgangsöffnung (7) aus dem Hohlraum (3) schiebt, dass sich der Abstand von dem Kontaktelement (6) zu der Zuführöffnung (5) mit einer Vergrößerungsrate vergrößert, und in einem dritten Zustand, in welchem der gesamte Hohlraum (3) mit Spritzgussmaterial (2) gefüllt ist, sich das Kontaktelement (6) außerhalb des Hohlraums (3) befindet.

2. Spritzgussvorrichtung (1) nach Anspruch 1, wobei die Durchgangsöffnung (7) im Wesentlichen gegenüber der Zuführöffnung (5) angeordnet ist.

3. Spritzgussvorrichtung (1) nach einem der vorhergehenden Ansprüche, wobei das Kontaktelement (6) als Prallwand ausgebildet ist.

4. Spritzgussvorrichtung (1) nach einem der vorhergehenden Ansprüche, wobei beim Befüllen des Hohlraums (3) die Herausziehrate des Kontaktelements (6) und/oder die Zuführrate zeitlich konstant sind.

5. Spritzgussvorrichtung (1) nach einem der vorhergehenden Ansprüche, wobei das Kontaktelement (6) im Wesentlichen länglich und zylinder- oder quaderförmig ausgebildet ist.

6. Spritzgussvorrichtung (1) nach einem der vorhergehenden Ansprüche, wobei die Spritzgussvorrichtung (1) eine Steuervorrichtung aufweist, welche dazu eingerichtet ist, die Herausziehrate des Kontaktelements (6) aus dem Hohlraum (3) zu steuern.

7. Spritzgussvorrichtung (1) nach einem der vorhergehenden Ansprüche, wobei das Kontaktelement (6) durch die Durchgangsöffnung (7) linear bewegbar ist.

8. Verfahren zur Herstellung eines Bauteils mittels einer Spritzgussvorrichtung (1), wobei das Verfahren die folgenden Schritte umfasst:
- Bereitstellen einer Spritzgussvorrichtung (1), umfassend eine erste (1a) und zweite Werkzeughälfte (1b), wobei zwischen der ersten (1a) und zweiten Werkzeughälfte (1b) ein mit Spritzgussmaterial (2) befüllbarer Hohlraum (3) gebildet ist, eine Zuführvorrichtung (4) zur Zuführung von Spritzgussmaterial (2) in den Hohlraum (3) über eine Zuführöffnung (5) und ein Kontaktelement (6), welches über eine Durchgangsöffnung (7) von außerhalb des Hohlraums (3) in den Hohlraum (3) einbringbar ist, wobei das Kontaktelement (6) in einem Zustand, in welchem sich kein Spritzgussmaterial (2) in dem Hohlraum (3) befindet, einen ersten Abstand zu der Zuführöffnung (5) aufweist;
- Zuführen von Spritzgussmaterial (2) in den Hohlraum (3) mittels der Zuführvorrichtung (4) zur Bildung eines Bauteils, wobei Spritzgussmaterial (2) über die Zuführöffnung (5) mit einer Zuführrate in den Hohlraum (3) eingebracht wird, wobei sich beim Zuführen das Spritzgussmaterial (2) in dem Hohlraum (3) ausbreitet und diesen befüllt, wobei sich dabei eine Fließfront aus Spritzgussmaterial (2) durch den Hohlraum (3) ausbreitet bis dieser vollständig befüllt ist,
**dadurch gekennzeichnet, dass**
während dem Befüllen des Hohlraums (3) das Kontaktelement (6) die Fließfront kontaktiert, wobei, durch den Kontakt der sich ausbreitenden Fließfront mit dem Kontaktelement (6), das Spritzgussmaterial (2) das Kontaktelement (6) mit einer Herausziehrate dergestalt durch die Durchgangsöffnung (7) aus dem Hohlraum (3) schiebt, dass sich der Abstand des Kontaktelements (6) zu der Zuführöffnung (5) mit einer Vergrößerungsrate vergrößert, wobei sich, wenn der gesamte Hohlraum (3) mit Spritzgussmaterial (2) gefüllt ist, das Kontaktelement (6) außerhalb des Hohlraums (3) befindet.

9. Verfahren nach Anspruch 8, wobei die Durchgangsöffnung (7) im Wesentlichen gegenüber der Zuführöffnung (5) angeordnet ist.

10. Verfahren nach Anspruch 8 oder 9, wobei das Kontaktelement (6) als Prallwand ausgebildet ist.

11. Verfahren nach einem der Ansprüche 8 bis 10, wobei während dem Befüllen des Hohlraums (3) die Herausziehrate des Kontaktelements (6) und die Zuführrate zeitlich konstant sind.

12. Verfahren nach einem der Ansprüche 8 bis 11, wobei die Spritzgussvorrichtung (1) eine Steuervorrichtung aufweist, welche dazu eingerichtet ist, die Herausziehrate des Kontaktelements (6) aus dem Hohlraum (3) zu steuern.

13. Verfahren nach einem der Ansprüche 8 bis 12, wobei die Herausziehrate kleiner oder gleich der Zuführrate ist.

14. Verfahren nach einem der Ansprüche 8 bis 12, wobei die Herausziehrate größer oder gleich der Zuführrate ist.

15. Verfahren nach einem der Ansprüche 8 bis 14, wobei die Vergrößerungsrate beim Befüllen zeitlich konstant ist.
